# DEMANDE DE BREVET EUROPEEN

(11) **EP 2 380 804 A1**
(43) Date de publication de la demande: **26.10.2011**
(21) Numéro de dépôt: 11160474.0
(22) Date de dépôt: 30.03.2011
(51) Int. Cl.: B62D 49/06, B62D 49/08, B60R 9/06

(54) **Contrepoids de sécurité fonctionnel et multiservices**

(30) Priorité: 26.04.2010 FR 1053185
(71) Demandeur: Actibac, 54550 Maizières (FR)
(72) Inventeur: Bachmann, Jacques, 54550, MAIZIERES (FR)
(74) Mandataire: Loyer & Abello

(57) **Abrégé**

Contrepoids de sécurité fonctionnel et de sécurité destiné à être disposé à l'avant d'un véhicule roulant, caractérisé par le fait que il est constitué en trois parties : une partie centrale (1) constituée par un coffre de rangement et deux parties latérales (2), situées de chaque coté de ladite partie centrale (1), constituées par des masses (2).

## Description

La présente invention est relative à un contrepoids frontal pour véhicule roulant, particulièrement pour tracteurs agricoles, présentant la particularité d'être à la fois fonctionnel et constituant un organe de sécurité.

Il est connu de disposer à l'avant des tracteurs agricoles des masses faisant contrepoids.

L'inconvénient présenté par ces contrepoids provient de ce que ces masses sont constituées par des gueuses de fonte qui font saillie à l'avant du tracteur d'environ un demi-mètre et sur une largeur relativement faible, nettement inférieure à la largeur dudit tracteur; de sorte que, en cas de collision, ces contrepoids agissent d'une façon analogue à un éperon, qui pénètre dans l'obstacle et le bloque tout en le laissant éventuellement heurter la roue avant du tracteur, qui risque d'être endommagée.

D'autre part, les tracteurs circulent de plus en plus souvent sur les routes, en allant de plus en plus vite ce qui peut être dangereux. En effet si pour un véhicule venant en sens opposé le capot avant d'un tracteur est bien visible, parce que coloré de couleur voyante, il n'en est pas de même pour le contrepoids et les roues avant; de sorte que le conducteur du véhicule venant en sens inverse les voit mal ou même pas du tout.

En outre les tracteurs actuellement en service ne comportent pas de volume de rangement et n'ont qu'une boite à outils de dimensions nettement insuffisantes.

La présente invention a pour objet de pallier ces inconvénients en proposant un contrepoids fonctionnel remplissant toutes ou une partie des fonctions suivantes : la fonction de contrepoids, la fonction de volume de rangement, la fonction de pare-chocs, la fonction d'équilibrage latéral du tracteur et la fonction d'organe de signalisation pour la sécurité .

Le contrepoids fonctionnel et de sécurité pour tracteurs agricoles ou autre véhicule selon la présente invention est caractérisé par le fait qu'il est constitué en trois parties : une partie centrale constituée par un coffre de rangement et deux parties latérales, situées de chaque coté de ladite partie centrale, constituées par des masses.

La présente invention peut comporter les dispositions suivantes prises ensemble ou séparément
a) Les masses latérales peuvent être en béton ou en fonte.
b) Elles sont symétriques.
c) Elles sont réversibles de façon à pouvoir être fixées à droite ou à gauche de la partie centrale.
d) Chaque masse latérale est monobloc.
e) Lesdites masses latérales sont constituées d'une pluralité d'éléments empilables; de sorte qu'il est possible d'en empiler un nombre différent à droite ou à gauche de la partie centrale afin de réaliser un équilibrage latéral du tracteur.
f) Lesdites masses peuvent être empilées soit verticalement soit latéralement, soit les deux à la fois.
g) Leur partie avant est infléchie vers l'intérieur ; de façon à protéger la partie centrale.
h) La partie centrale faisant coffre est en tôle épaisse d'environ 8 à 10 mm d'épaisseur ; de façon à pouvoir résister aux chocs.
i) Le coffre est aménagé pour recevoir divers éléments de service tels que :
   outils, pièces de rechange, compresseur, réservoir d'eau ou autres.
j) La partie supérieure du coffre est munie d'un couvercle.
k) Ledit couvercle est muni d'une serrure et d'une clé.
l) Les parois frontale et latérales du contrepoids sont munies d'une signalétique de sécurité.
m) Le contrepoids est muni au milieu de sa face avant d'un point d'accrochage.
n) L'ensemble est porté par l' attelage trois points avant du véhicule.
o) L'ensemble est porté par un support fixe du véhicule.

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux dessins annexés. Sur ces dessins :
La figure 1 représente un tracteur muni du contrepoids avant connu.
La figure 2 est une vue de trois quarts avant du contrepoids selon un mode de réalisation de la présente invention.
La figure 3 est une vue en éclaté, de trois-quarts avant, illustrant le contrepoids de la figure 2.
La figure 4 est une vue schématique, en plan, du contrepoids de la figure 2 disposé à l'avant d'un tracteur.
La figure 5 est une vue correspondant à la figure 2 illustrant un premier mode de réalisation des masses latérales.
La figure 6 est une vue partielle illustrant un deuxième mode de réalisation des masses latérales.
La figure 7 est une vue partielle illustrant un troisième mode de réalisation des masses latérales.
La figure 8 est une vue schématique illustrant le contrepoids porté par l'attelage trois points d'un tracteur.
La figure 9 est une vue schématique illustrant la fixation du contrepoids au moyen d'un support fixé à l'avant du tracteur.

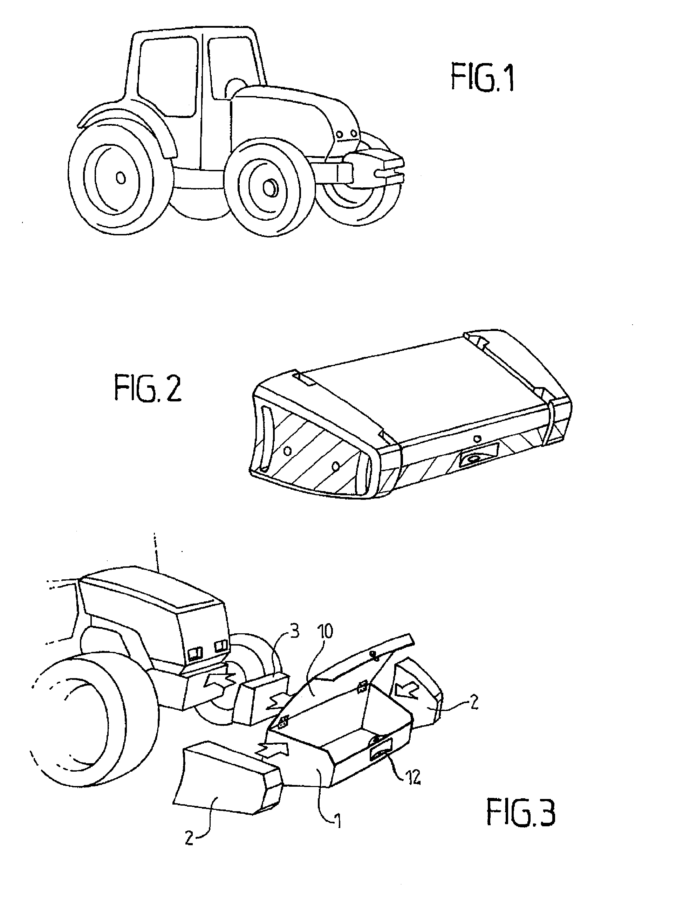

En se reportant à la figure 1 on voit que les contrepoids connus sont constitués par des gueuses en fonte qui sont accrochées à l'avant du tracteur et qui font saillie à l'avant dudit tracteur. D'une part elles n'ont aucune fonction autre que de faire contrepoids ; d'autre part elles font saillie en avant du tracteur sur une distance de l'ordre de 50 centimètres et sur une faible largeur ; de sorte qu'elles constituent une sorte d'éperon, ce qui est très dangereux en cas d'accident car cet éperon va pénétrer dans l'obstacle, véhicule ou autre, et le bloquer avec le risque supplémentaire que cet obstacle aille heurter une des roues avant du tracteur.

La présente invention a pour double objet : d'une part d'éliminer ce danger et d'autre part conférer au contrepoids des fonctions multiples que ne remplissent aucun des contrepoids connus. Dans un mode de réalisation, ces fonctions multiples comportent : la fonction de contrepoids, la fonction de volume de rangement, la fonction de pare-chocs, la fonction d'équilibrage latéral du tracteur et la fonction de signalisation pour la sécurité.

Les figures 2,3 et 4 représentent le contrepoids selon un tel mode de réalisation de l'invention.

On voit que ce contrepoids est constitué de trois parties : une partie centrale 1 et deux parties latérales 2 situées de chaque coté de la partie centrale 1. Un moyen de fixation 3 relie le contrepoids 1-2 à un tracteur.

La partie centrale 1 constitue un coffre de rangement, alors que les deux parties latérales 2 sont des masses en béton ou en fonte.

Les parois de la partie centrale 1 ont une épaisseur de l'ordre de 8 à 10 mm de façon à être très rigides.

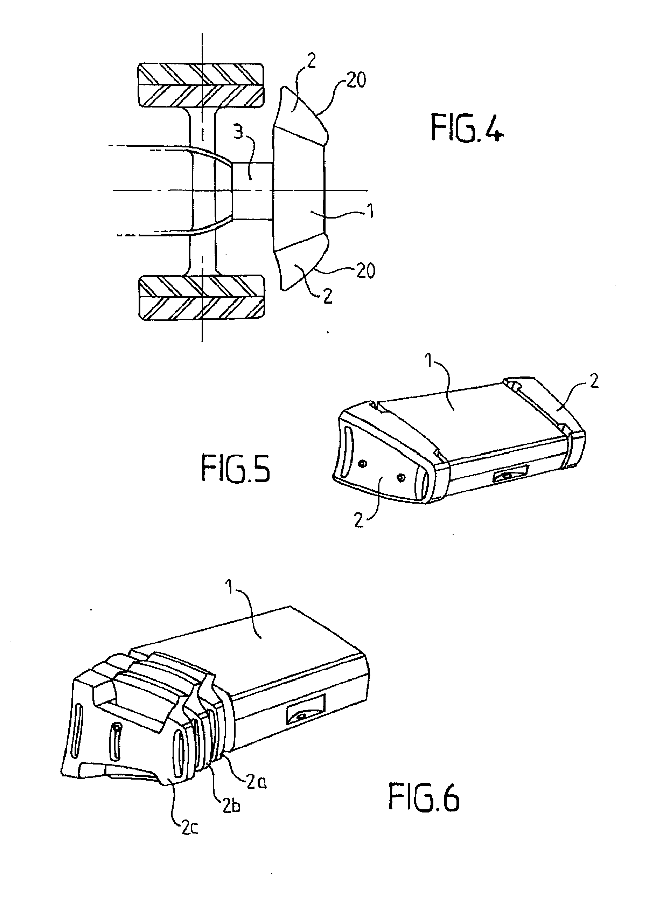

Comme on le voit sur la figure 4 la largeur du contrepoids 1-2 est au moins égale à la distance séparant les plans médians des roues avant du tracteur.

Les parois externes 20 des masses latérales 2 sont dirigées obliquement vers l'arrière ; de façon à constituer des surfaces de fuite guidant vers l'extérieur du tracteur les objets qui seraient heurtés par ledit tracteur. Cette forme particulière permet au contrepoids selon l'invention de remplir la fonction pare-chocs.

De préférence, comme cela est représenté à la figure 5, les masses 2 sont identiques de façon qu'il n'y en ait qu'un seul modèle et qu'elles puissent être indifféremment être placées du coté droit ou du coté gauche de la partie centrale 1.

Selon un deuxième mode de réalisation de l'invention, représenté figure 6, les masses 2 sont constituées de petits éléments identiques, qui sont empilés les uns contre les autres, ce qui permet à l'utilisateur d'en répartir latéralement les poids et donc de réaliser un équilibrage latéral du tracteur. Dans l'exemple représenté il y a trois masses 2a,2b,2c du coté droit et aucune du coté gauche ce qui permet de compenser le déséquilibre provoqué par un outil monté sur le coté gauche du tracteur.

Les masses élémentaires 2a, 2b, 2c sont réversibles pour pouvoir se monter à droite comme à gauche et sont munies de moyens leur permettant de s'accrocher les unes sur les autres.

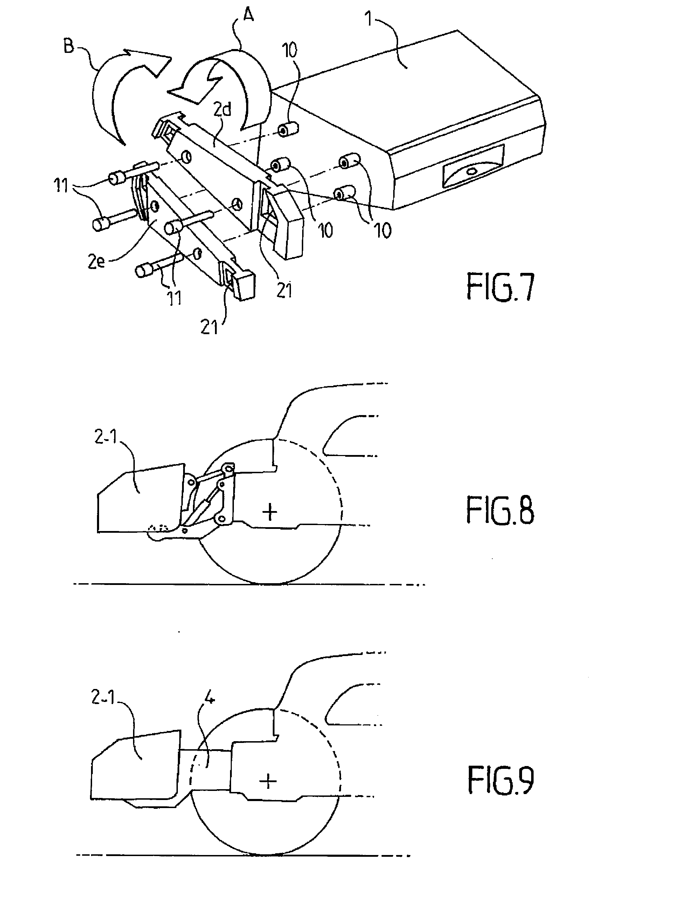

La figure 7 représente une autre variante de réalisation. Au lieu d'être empilées latéralement les unes contre les autres, comme sur la figure 6, les masses 2d et 2 e sont empilées verticalement les unes sur les autres. Chacune des masses 2d et 2e est doublement réversible. Ainsi la masse 2d, placée en haut peut se retourner sur le plan vertical A pour venir se placer en bas sur le même coté ; la masse 2e peut se retourner sur un plan horizontal B pour se placer du coté opposé. Chaque masse se verrouille sur des ergots 10 recevant des vis de fixation 11. Des ouvertures telles que 21 servent de poignées de manutention ou permettent de passer des sangles.

Bien évidemment on peut combiner les moyens décrits aux figures 6 et 7 en réalisant à la fois un empilage latéral et un empilage vertical.

Les parties avant des masses 2 peuvent être infléchies l'une vers l'autre vers le centre ; de façon à protéger la partie centrale 1.

Cette partie centrale 1 constituant un coffre de rangement, on peut y prévoir des logements pour une boite à outils, des pièces de rechange pour l'outil porté par le tracteur, un compresseur, un réservoir d'eau ou autres.

Comme on peut le voir sur la figure 3, le coffre 1 peut être muni d'un couvercle 10 pouvant être fermé à clé.

Comme on le voit également sur la figure 3, le coffre 1 est muni, au milieu de sa face frontale, d'un point d'accrochage 12.

Le contrepoids 1-2 ainsi décrit est destiné à être porté à l'avant du tracteur.

Il peut être porté par l'attelage trois points avant du tracteur, si ce dernier en est équipé (figure 8), ou être porté par un organe de fixation spécial 4 fixé au tracteur (figure 9).

Un des avantages non négligeable de cette invention est que il est possible de disposer sur les faces extérieures des masses 2 et la face frontale du coffre central 1 une signalétique de sécurité telle que les bandes obliques blanches et rouges illustrées à la figure 2, ce qui n'est pas possible avec les contrepoids actuels.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » pour un élément n'exclut pas, sauf mention contraire, la présence d'une pluralité de tels éléments.

Dans les revendications, tout signe de référence entre parenthèses ne saurait être interprété comme une limitation de la revendication.

## Revendications

1. Contrepoids fonctionnel et de sécurité destiné à être disposé à l'avant d'un véhicule roulant, **caractérisé par le fait qu'**il est constitué en trois parties: une partie centrale (1) constituée par un coffre de rangement et deux parties latérales (2), situées de chaque coté de ladite partie centrale (1), constituées par des masses (2).

2. Contrepoids fonctionnel et de sécurité selon la revendication 1, **caractérisé par le fait que** les masses latérales (2) sont en béton ou en fonte.

3. Contrepoids fonctionnel et de sécurité selon la revendication 1 **caractérisé par le fait que** les masses (2) sont symétriques et réversibles de façon à pouvoir être fixées à droite ou à gauche de la partie centrale (1).

4. Contrepoids fonctionnel et de sécurité selon l'une des revendications 1 à 3, **caractérisé par le fait que** les parois externes (20) des masses latérales (2) sont dirigées obliquement vers l'arrière de façon à constituer des surfaces de fuite qui guident vers l'extérieur du véhicule les objets qui seraient heurtés par ledit véhicule.

5. Contrepoids fonctionnel et de sécurité selon la revendication 3, **caractérisé par le fait que** chaque masse (2) est constituée d'une pluralité d'éléments empilables ; de sorte qu'il est possible d'en empiler un nombre différent à droite ou à gauche de la partie centrale (1) ; afin de réaliser un équilibrage latéral du tracteur.

6. Contrepoids fonctionnel et de sécurité selon la revendication 5, **caractérisé par le fait que** lesdites masses (2) peuvent être empilées soit verticalement, soit latéralement ou les deux.

7. Contrepoids fonctionnel et de sécurité selon la revendication 1, **caractérisé par le fait que** la partie avant desdites masses (2) est infléchie vers l'intérieur ; de façon à protéger la partie centrale (1).

8. Contrepoids fonctionnel et de sécurité selon la revendication 1, **caractérisé par le fait que** les parois frontale et latérales du contrepoids sont munies d'une signalétique de sécurité.

9. Contrepoids fonctionnel et de sécurité selon l'une des revendications 1 à 8, **caractérisé par le fait qu'**il est porté soit par un attelage trois points avant du véhicule, soit par un support fixe situé à l'avant du véhicule.

10. Tracteur agricole comportant un contrepoids selon l'une des revendications 1 à 9 disposé à l'avant dudit tracteur.
